(19) Europäisches Patentamt

European Patent Office

Office européen des brevets

(11) **EP 1 078 958 B1**

(12) **EUROPÄISCHE PATENTSCHRIFT**

(45) Veröffentlichungstag und Bekanntmachung des Hinweises auf die Patenterteilung:
**28.05.2003 Patentblatt 2003/22**

(51) Int Cl.⁷: $C09C\ 1/50$, C09C 1/56, C09C 1/58

(21) Anmeldenummer: **99116925.1**

(22) Anmeldetag: **27.08.1999**

(54) **Russ, ein Verfahren zu seiner Herstellung sowie seine Verwendung**

Carbon black, process of its production and its use

Noir de carbone, procédé pour sa préparation ainsi que son utilisation

(84) Benannte Vertragsstaaten:
**AT BE CH CY DE DK ES FI FR GB GR IE IT LI LU MC NL PT SE**

(43) Veröffentlichungstag der Anmeldung:
**28.02.2001 Patentblatt 2001/09**

(73) Patentinhaber: **Degussa AG**
**40474 Düsseldorf (DE)**

(72) Erfinder:
• **Bergemann, Klaus, Dr.**
**63526 Erlensee (DE)**
• **Vogel, Karl, Dr.**
**63755 Alzenau-Michelbach (DE)**

(56) Entgegenhaltungen:
**EP-A- 0 867 478     US-A- 4 316 881**

**Beschreibung**

Die Erfindung betrifft einen Ruß, ein Verfahren zu seiner Herstellung sowie seine Verwendung.

In einem Furnaceruß-Reaktor kann durch Pyrolyse von Kohlenwasserstoffen Furnaceruß hergestellt werden, wie aus Ullmanns Encyclopädie der technischen Chemie, Band 14, Seite 637-640 (1977) bekannt ist. In dem Furnaceruß-Reaktor wird durch Verbrennung eines Brenngases oder eines flüssigen Brennstoffes mit Luft eine Zone mit hoher Energiedichte erzeugt und darin der Rußrohstoff eingedüst. Bei Temperaturen zwischen 1200°C-1900°C wird der Rußrohstoff pyrolisiert. Die Rußstruktur läßt sich durch die Anwesenheit von Alkali- oder Erdalkaliionen bei der Rußbildung beeinflussen, deshalb werden häufig derartige Additive als wäßrige Lösungen dem Rußrohstoff zugesetzt. Die Reaktion wird durch Eindüsen von Wasser abgebrochen (Quenchen) und der Ruß mit Abscheidern beziehungsweise Filtern vom Abgas getrennt. Der so erhaltene Ruß wird auf Grund seiner geringen Schüttdichte noch granuliert. Dies kann in einer Perlmaschine unter Zusatz von Wasser, dem geringe Mengen eines Perlhilfsmittels zugemischt werden können, erfolgen.

Es ist weiterhin bekannt, daß Rußrohstoffe flüssig, gasförmig oder verdampft eingespritzt werden können. Im allgemeinen ist der Rußrohstoff ein Kohlenwasserstofföl oder Erdgas (US Reissue Patent No. 28,974 und US Patent No. 3,922,335).

Aus US 4,316,881 ist ein Verfahren zur Herstellung von Ruß bekannt, wobei ein flüssiger Brennstoft und ein oxidierendes Gas im Brenner bereich gemischt wird, die Mischung durch einen Flammenhalter mit einer Vielzahl von parallelen Öffnungen geleitet wird und die Mischung verbrannt wird um einen heißen Verbrennungsstrom zu erhalten.

Es ist weiterhin bekannt, daß Furnaceruße mit einem Aschegehalt von $\leq 50$ ppm, einem Schwefelgehalt von $\leq 50$ ppm und Kristallitdimensionen von $L_a$ und $L_c \leq 3{,}0$ nm besonders vorteilhaft in Kabelummantelungen eingesetzt werden können. Die sogenannten "Wasserbäume", die auf wasserlösliche Ionen wie Schwefel und Metallkationen zurückgeführt werden und zu Fehlern in der Isolierschicht führen, können somit reduziert werden (EP Patent No. 0 867 478).

Der Industriestandard für solche Ruße ist der Acetylenruß mit niedrigem Schwefel und Aschegehalt.

Nachteile der bekannten Furnaceruße sind die hohen Ascheund Schwefelgehalte, die verstärkt zu Fehlstellen in Kabelummantelungen führen. Der Acetylenruß besitzt die geforderten, niedrigen Werte, hat aber einen relativ hohen Preis, und die analytischen Daten können nicht, wie bei den Furnacerußen, stark variiert werden. Der Ruß nach dem EP Patent No. 0 867 478 erreicht die Asche- und Schwefelgehalte des Acetylenrußes. Wie dem Fachmann jedoch bekannt ist, kann auf Grund des sehr niedrigen Aschegehalts nur wenig Perlhilfsmittel aufgebracht werden. Dies führt zu schlechten Perleigenschaften.

Es besteht somit die Aufgabe, einen Ruß mit niedrigem Asche- und Schwefelgehalt herzustellen, der außerdem gute Perleigenschaften besitzt.

Gegenstand der Erfindung ist ein Furnaceruß, welcher dadurch gekennzeichnet ist, daß er einen Aschegehalt zwischen 0,005 Gew.-% und 0,05 Gew.-%, bevorzugt zwischen 0.005 Gew.-% und 0,01 Gew.-% und einen Schwefelgehalt größer 0,005 Gew.-% aufweist.

In einer Ausführungsform kann der Aschegehalt zwischen 0,007 Gew.-% und 0,01 Gew.-% liegen.

In einer weiteren Ausführungsform kann der Schwefelgehalt zwischen 0,005 Gew.-% und 4 Gew.-%, besonders bevorzugt zwischen 0,005 Gew.-% und 0,01 Gew.-% liegen.

Der geperlte Furnaceruß weist einen Perlabrieb (ASTM D 1508) von kleiner 3,5 %, bevorzugt kleiner 2,5 %, auf.

Der geperlte Furnaceruß kann einen Finesgehalt (DIN 53583) von kleiner 4,5 %, bevorzugt kleiner 3,0%, aufweisen.

In einer weiteren Ausführungsform kann die Asche Oxide von Edelmetallen, Lanthaniden, Actiniden, Germanium, Zirkonium, Yttrium, Kupfer, Nickel, Wolfram, Molybdän und/oder Aluminium und/oder Mischungen dieser Oxide enthalten. Die letzt genannte Ausführungsform ist besonders geeignet für die Anwendung in Brennstoffzellen.

Ein weiterer Gegenstand der Erfindung ist ein Verfahren zur Herstellung des erfindungsgemäßen Rußes, welches dadurch gekennzeichnet ist, daß man das Furnaceruß-Verfahren verwendet und dabei gasförmige Rußrohstoffe und/oder verdampfbare Rußrohstoffe, metallionenarmes Quenchwasser und metallionenarmes Perlwasser einsetzt, wobei die Summe des Aschegehaltes des Rußrohstoffes, Quench- und Perlwassers, welches jeweils zur Herstellung einer bestimmten Menge des erfindungsgemäßen Rußes nötig ist, zwischen 0,005 Gew.-% und 0,05 Gew.-% liegt.

Eine beispielhafte Berechnung wäre wie folgt: Zur Herstellung von 1 kg Endprodukt werden 2 kg Rußrohstoff, 1 kg Quenchwasser und 1 kg Perlwasser benötigt. Für die Berechnung wird berücksichtigt, daß das Perlwasser Perlhilfsmittel enthält und dem Rußöl entsprechende Additive zur Struktureinstellung beigemischt sein können.

| | Menge [g] für die Herstellung von 1000g Ruß | Aschegehalt [%] | Asche berechnet [g] | Asche bezogen auf Endprodukt [%] |
|---|---|---|---|---|
| Rußrohstoff | 2000 | 0,050 | 1,0 | |
| Quenchwasser | 1000 | 0,0004 | 0,4 | |
| Perlwasser | 1000 | 0,0005 | 0,5 | |
| | | | 1,9 | → 0,19 |

Um einen möglichst niedrigen Asche- und Schwefelgehalt erzielen zu können, kann der Rußrohstoff einen möglichst hohen Gehalt an Kohlenwasserstoff aufweisen. Deshalb können vorzugsweise gasförmige Rußrohstoffe, wie Propan, Butan und / oder Erdgas oder verdampfbare Rußrohstoffe, wie Aromaten und / oder Aliphaten eingesetzt werden.

In einer besonderen Ausführungsform können dem Rußrohstoff und/oder dem Quenchwasser leicht verdampfbare Verbindungen von geeigneten Edelmetall-, Lanthaniden-, Actiniden-, Germanium-, Zirkonium, Yttrium, Kupfer, Nickel, Wolfram, Molybdän und/oder Aluminiumverbindungen und/oder Mischungen dieser Verbindungen zugesetzt werden. Diese Verbindungen können vorzugsweise elementorganische Verbindungen sein.

Ein weiterer Gegenstand der Erfindung ist die Verwendung des erfindungsgemäßen Rußes in Brennstoffzellen und Kabelabschirmungen.

Trotz des niedrigen Aschegehaltes entsprechen die Perleigenschaften den bekannten Rußen.

**Beispiele**

Bestimmungsmethoden

Aschebestimmung

Die Aschebestimmung erfolgt über die Metallanalyse im Ruß.

Der Aschegehalt ist definiert, als die Summe der Oxide folgender Elemente: Al, Ba, Ca, Cr, Fe, Mg, Ni, Si, Sr, V, Zn, K und Na. Die Berechnung des Aschegehaltes aus der Metallanalyse geht davon aus, daß die Elemente als folgende Oxide vorliegen $Na_2O$, $Al_2O_3$, $Cr_2O_3$, $MgO$, $SrO$, $NiO$, $BaO$, $Fe_2O_3$, $CaO$, $SiO_2$, $V_2O_5$, $ZnO$, $K_2O$ und die Asche im wesentlichen nur aus diesen Verbindungen besteht. Der Aschegehalt wird durch Addition der einzelnen Oxide erhalten und diese werden berechnet aus:

$$EL_xO_y \, , \, \mu g/g = EL, \, \mu g/g * \text{Molekulargewicht } EL_xO_y \, / \, x \, *$$

Atomgewicht EL, wobei $EL_xO_y$ die oben augeführten Elementoxide sind. Der Elementgehalt (EL, ppm) wird durch Elementaranalyse des Rußes durch induktiv gekoppeltes Plasma (ICP) und Atomabsorptionsspektroskopie (AAS) bestimmt. Das Ergebnis ist auf die Rußeinwaage bezogen. Die Analyse beruht auf Atomemission und Atomabsorption von Kationen.

Geräte und Reagenzien:

1. Analytikwaage (Genauigkeit 0.1mg)

2. Platintiegel mit Deckel (50ml Kapazität)

3. Muffelofen

4. Exikator

5. Polypropylen-Meßkolben 100.0 ml

6. Induktiv gekoppeltes Plasma (ICP) Spektrometer von INSTRUMENTS, SA, JY-38 Sequential Scanning High Resolution Spectrometer und H-20 externer Monochromator

7. Atomabsorptionsspektrometer (AAS) von PERKIN ELMER, Model 603

8. Entsalztes Wasser (18megaohm)

9. Schmelzmittel $LiBO_2$

10. Salzsäure 36.5 - 38%

11. Salpetersäure 69-71%

12. ICP Metallstandards für ICP und AAS Kalibrierung

Durchführung:

1. Platintiegel 15 Minuten in kochender Salzsäure reinigen

2. Platintiegel waschen mit entsalztem Wasser, trocknen im Ofen und abkühlen im Exikator

3. Leergewicht Tiegel bestimmen

4. Ruß in Tiegel füllen, ca. 2/3 des Füllvolumens, Gewicht bestimmen

5. gefüllter Tiegel in kaltem Muffelofen stellen und auf 550°C hochheizen

6. nach 16 Stunden oder bis der gesamte Ruß verascht ist Tiegel herausnehmen und im Exikator abkühlen lassen

7. Gewichtsbestimmung des Tiegels

8. 1.0 g $LiBO_2$ im Tiegel mit der Asche mischen

9. der mit einem Deckel versehene Tiegel wird mit einem Brenner auf 850°C und anschließend auf 1000°C aufgeheizt, Temperatur wird für 30 Minuten gehalten oder bis die Asche gelöst ist (gelegentliches schwenken des Tiegels zur schnelleren Lösungsherstellung)

10. unter Schwenken des Tiegels wird dieser in einen Behälter mit kaltem Wasser eingetaucht, so tief, bis die Schmelze im Tiegel auf der gleichen Höhe ist wie der Wasserspiegel

11. Zugabe von 40ml 5%igen Salpetersäure, aufheizen und gegebenenfalls mit Magnetrührer mischen

12. nachdem die Schmelze gelöst ist, wird der Inhalt in einen mit Säure gewaschenen 100 ml Kunststoff-Meßkolben eingefüllt

13. Zugabe eines internen Standards (z.B. 2.0 ml von 500 µg/ml Be-Lösung)

14. Meßkolben auf 100 ml Marke mit 5%iger Salpetersäure auffüllen

15. ICP und AAS kalibrieren

16. Messung der Elemente mittels ICP, Ergebnis ist Menge Element bezogen auf das Rußgewicht (EL, µg/g)

17. Na und K werden mit AAS bestimmt in µg/ml,

Umrechnung: AAS, μg/ml *100 ml / Probengewicht, g = EL, μg/g

Der Aschegehalt wird berechnet durch die Summe der Oxide in μg/g, und anschließende Umrechnung auf %:

$$\text{Asche, \%} = \text{Summe der Oxide in μg/g} * 100\% * 10^{-6} \text{ g/μg.}$$

Schwefelbestimmung

Die Schwefelbestimmung erfolgt durch die Röntgenfluoreszenzspektroskopie.

Geräte und Reagenzien:

1. Analytikwaage (Genauigkeit 0.1mg)

2. SPEX Mischer/Mühle Model 8000

3. SPEX 13 mm Matrizenset (1/2 inch Durchmesser) mit 13 mm polierten Stahlstempeln (Model 3613)

4. CARVER Hydraulik Presse, Kapazität von mindestens 12 Tonnen

5. Röntgenfluoreszenzspektrometer, RIGAKU Model 3070

6. Wäge-/ Mischfläschchen, Polystyrol CHEMPLEX cat.no. 1133 - 75mm x 26mm Durchmesser

7. Mahlkugeln, 8mm

8. Borsäure 1/2g Tabletten, zur Spektroskopie

9. 2.5 cm quadratische Plastikbox

10. Bariumsulfat Pulver, FISHER SCIENTIFIC CO. cat. no. B-68

11. SpektoBlend CHEMPLEX cat.no.660

Durchführung:

1. einwiegen einer 0.25g Probe in ein Wäge-/Mischfläschchen mit 2 Mahlkugeln

2. Zugabe von zwei ½ g Borsäuretabletten

3. nach Verschließen wird 15 Minuten mit der SPEX Mühle gemahlen

4. entfernen der Kugeln

5. einfüllen des Inhaltes in eine ½ inch Matrize und pressen einer Tablette bei 20000 pounds für 20 s

6. Messung der Tablette im Spektrometer
P-10 Detektorgas, He-Atmosphäre, 40 KV Röntgenröhre, 65 mA, Rh Endfensterröhre, Element Code 505, Standards CBS1, CBS4, CBSR, S K-alpha Ge Kristallwellenlänge 110.700 Grad, Hintergrund Korrekturwellenlänge 109.700 Grad, Meßzeit 50s, 10mm Probenhalter, 15mm Diaphragma

7. Kalibrierung des Spektrometers und Messung

Perleigenschaften

Der Perlabrieb wird nach ASTM D 1508, der Finesgehalt nach DIN 53583 und die Perlhärte nach ASTM D 3313 bestimmt.

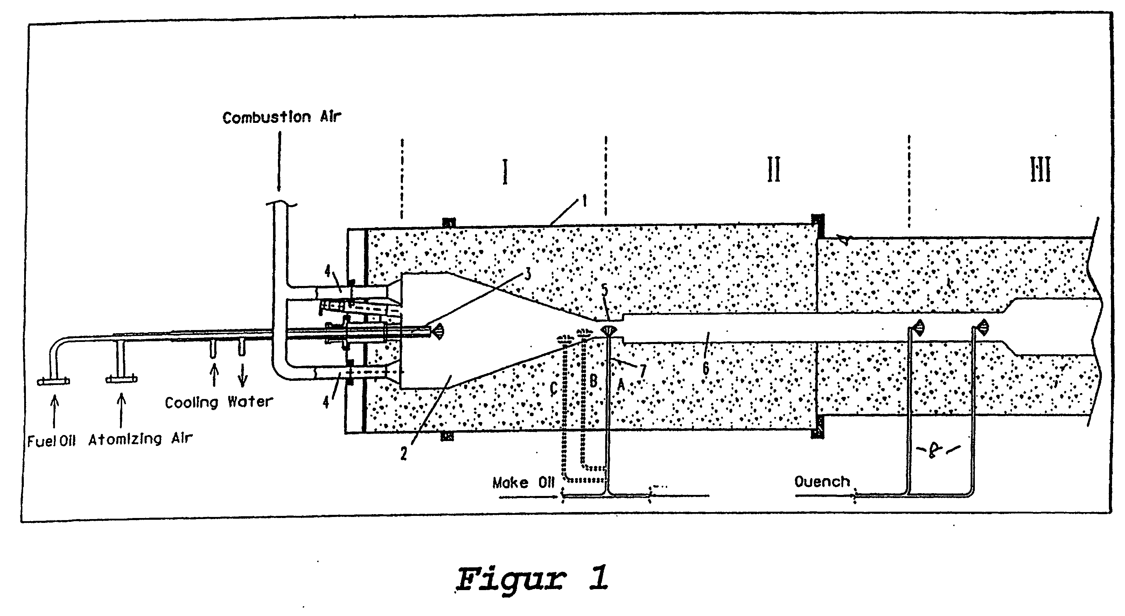

Ein Furnaceruß-Reaktor zur Herstellung des erfindungsgemäßen Rußes ist schematisch in Figur 1 dargestellt. Die Ausführungsform ist jedoch nicht auf diesen Reaktortyp beschränkt. Der Rußreaktor 1 in Figur 1 besitzt eine Brennkammer 2, in der das heiße Abgas für die Pyrolyse des Rußrohstoffes durch Verbrennen von brennbarem Gas, Dampf oder Flüssigkeit unter Zufuhr von einem Überschuß an Luftsauerstoff erzeugt wird. Der Brennstoff wird über die axiale Brennerlanze 3 in die Brennkammer eingeführt und kann in axialer Richtung verschoben werden. Die Zufuhr der Verbrennungsluft erfolgt über die Öffnung 4 in der Stirnwand der Brennerkammer. Die Brennkammer läuft konisch auf die Engstelle 5 zu. Nach Durchqueren der Engstelle expandiert das Reaktionsgemisch in die Reaktionskammer 6. Mit A, B und C sind verschiedene Positionen für die Injektion des Rußrohstoffes in das heiße Prozeßgas mittels der Lanze 7 bezeichnet. Die Lanzen weisen an ihrem Kopf geeignete Sprühdüsen auf. An jeder Injektionsposition sind vier Injektoren über den Umfang des Reaktors verteilt. Das Quenchwasser wird durch die Lanzen 8 eingesprüht. Die Verbrennungs-, Reaktions- und Abbruchzone sind in der Figur 1 durch die römischen Ziffern I bis III gekennzeichnet. Sie können nicht scharf voneinander getrennt werden.

Beispiele für den erfindungsgemäßen Ruß werden in einem Reaktor nach Figur 1 hergestellt.

Der erfindungsgemäße Ruß kombiniert gute Perleigenschaften mit einem niedrigem Aschegehalt.

Der erfindungsgemäße Ruß zeigt ein besseres Granulierverhalten gegenüber den herkömmlichen Rußen und eine höhere Hydrophilie.

**Patentansprüche**

1. Furnaceruß, **dadurch gekennzeichnet, daß** der Aschegehalt zwischen 0,005 Gew.-% und 0,05 Gew.-%, und der Schwefelgehalt größer 0,005 Gew.-% sind und der geperlte Furnaceruß einen Perlabrieb von kleiner 3,5% aufweist.

2. Furnaceruß gemäß Anspruch 1, **dadurch gekennzeichnet, daß** der Aschegehalt zwischen 0,005 Gew.-% und 0,01 Gew.-% liegt.

3. Furnaceruß gemäß Anspruch 1, **dadurch gekennzeichnet, daß** der Schwefelgehalt zwischen 0,005 Gew.-% und 4 Gew.-% liegt.

4. Geperlter Furnaceruß, **dadurch gekennzeichnet, daß** dieser den Furnaceruß gemäß Anspruch 1 enthält und einen Finesgehalt von kleiner 4,5 % aufweist.

5. Furnaceruß gemäß Anspruch 1 bis 4, **dadurch gekennzeichnet, daß** die Asche Oxide von Edelmetallen, Lanthaniden, Actiniden, Germanium, Zirkonium, Yttrium, Kupfer, Nickel, Wolfram, Molybdän, Aluminium oder Mischungen der Oxide enthält.

6. Verfahren zur Herstellung des Furnacerußes gemäß Anspruch 1 bis 5, **dadurch gekennzeichnet, daß** man das Furnaceruß-Verfahren verwendet und dabei gasförmige Rußrohstoffe oder verdampfbare Rußrohstoffe, metallionenarmes Quenchwasser und metallionenarmes Perlwasser einsetzt, wobei die Summe des Aschegehaltes des Rußrohstoffes, Quench- und Perlwassers, welches jeweils zur Herstellung einer bestimmten Menge des erfindungsgemäßen Rußes nötig ist, zwischen 0,005 Gew.-% und 0,05 Gew.-% liegt.

7. Verfahren gemäß Anspruch 6, **dadurch gekennzeichnet, daß** als gasförmige Rußrohstoffe Propan, Butan und /oder Erdgas eingesetzt werden.

8. Verfahren gemäß Anspruch 6, **dadurch gekennzeichnet, daß** als verdampfbare Rußrohstoffe Aromate und / oder Aliphate eingesetzt werden.

9. Verfahren gemäß Anspruch 6, **dadurch gekennzeichnet, daß** dem Rußrohstoff leicht verdampfende Verbindungen von Edelmetallen, Lanthaniden, Actiniden, Germanium, Zirkonium, Yttrium, Kupfer, Nickel, Wolfram, Molybdän, Aluminium oder Mischungen dieser Verbindungen zugesetzt werden.

10. Verfahren gemäß Anspruch 6, **dadurch gekennzeichnet, daß** dem Quenchwasser leicht verdampfende Verbindungen von Edelmetallen, Lanthaniden, Actiniden, Germanium, Zirkonium, Yttrium, Kupfer, Nickel, Wolfram, Molybdän, Aluminium oder Mischungen dieser Verbindungen zugesetzt werden.

**11.** Verwendung des Furnace Ruß nach den Ansprüchen 1 bis 5 in Brennstoffzellen und Kabelabschirmungen.

## Claims

**1.** Furnace black, **characterised in that** the ash content is 0.005 wt.% to 0.05 wt.% and the sulfur content is greater than 0.005 wt.% and the beaded furnace black has a bead abrasion of less than 3.5%.

**2.** Furnace black according to claim 1, **characterised in that** the ash content is 0.005 wt.% to 0.01 wt.%.

**3.** Furnace black according to claim 1, **characterised in that** the sulfur content is 0.005 wt.% to 4 wt.%.

**4.** Beaded furnace black, **characterised in that** it contains the furnace black according to claim 1 and has a fines content of less than 4.5%.

**5.** Furnace black according to claims 1 to 4, **characterised in that** the ash contains oxides of noble metals, lanthanides, actinides, germanium, zirconium, yttrium, copper, nickel, tungsten, molybdenum, aluminium or mixtures of the oxides.

**6.** Process for the production of the furnace black according to claims 1 to 5, **characterised in that** the furnace black process is used, using gaseous black raw materials or vaporisable black raw materials, quenching water low in metal ions and bead water low in metal ions, the sum of the ash content of the black raw material, quenching water and bead water, required respectively to produce a certain quantity of the black according to the invention, is 0.005 wt.% to 0.05 wt.%.

**7.** Process according to claim 6, **characterised in that** propane, butane and/or natural gas are used as gaseous black raw materials.

**8.** Process according to claim 6, **characterised in that** aromatics and/or aliphatics are used as vaporisable raw materials.

**9.** Process according to claim 6, **characterised in that** readily vaporisable compounds of noble metals, lanthanides, actinides, germanium, zirconium, yttrium, copper, nickel, tungsten, molybdenum, aluminium or mixtures of these compounds are added to the black raw material.

**10.** Process according to claim 6, **characterised in that** readily vaporisable compounds of noble metals, lanthanides, actinides, germanium, zirconium, yttrium, copper, nickel, tungsten, molybdenum, aluminium or mixtures of these compounds are added to the quenching water.

**11.** Use of the furnace black according to claims 1 to 5, in fuel cells and cable sheathing.

## Revendications

**1.** Noir de fumée de four,
**caractérisé en ce que**
la teneur en cendres est comprise entre 0,005 % en poids et 0,05 % en poids, et la teneur en soufre est supérieure à 0,005 % en poids, et le noir de fumée de four perlé présente une usure de perle inférieure à 3,5 %.

**2.** Noir de fumêe de four selon la revendication 1,
**caractérisé en ce que**
la teneur en cendres se situe entre 0,005 % en poids et 0,01 % en poids.

**3.** Noir de fumée de four selon la revendication 1,
**caractérisé en ce que**

la teneur en soufre se situe entre 0,005 % en poids et 4 % en poids.

4.  Noir de fumée de four perlé,
    **caractérisé en ce qu'**
    il contient le noir de fumée de four selon la revendication 1 et il présente une teneur en fines inférieure à 4,5 % en poids.

5.  Noir de fumée de four selon les revendications 1 à 4,
    **caractérisé en ce que**
    la cendre contient des oxydes de métaux nobles, de lanthanides, d'actinides, de germanium, de zirconium, d'yttrium, de cuivre, de nickel, de tungstène, de molybdène, d'aluminium ou des mélanges des oxydes.

6.  Procédé de production du noir de fumée de four selon les revendications 1 à 5,
    **caractérisé en ce qu'**
    on utilise un procédé de noir de fumée de four, et
    on y emploie des matières premières de noir de fumée gazeuses ou des matières premières de noir de fumée vaporisables, de l'eau de trempe pauvre en ions métalliques et de l'eau de perlage pauvre en ions métalliques, la somme de la teneur en cendres de la matière première de noir de fumée, de l'eau de trempe et de l'eau de perlage, qui est nécessaire respectivement pour la production d'une quantité déterminée du noir de fumée selon l'invention, se situant entre 0,005 % en poids et 0,05 % en poids.

7.  Procédé selon la revendication 6,
    **caractérisé en ce que**
    comme matière première de noir de fumée gazeuse on utilise le propane, le butane et/ou le gaz naturel.

8.  Procédé selon la revendication 6,
    **caractérisé en ce que**
    comme matière première de noir de fumée vaporisable on utilise des composés aromatiques et/ou des composés aliphatiques.

9.  Procédé selon la revendication 6,
    **caractérisé en ce qu'**
    on ajoute à la matière première de noir de fumée des composés facilement vaporisables de métaux nobles, de lanthanides, d'actinides, de germanium, de zirconium, d'yttrium, de cuivre, de nickel, de tungstène, de molybdène, d'aluminium ou de mélanges de ces composés.

10. Procédé selon la revendication 6,
    **caractérisé en ce qu'**
    on ajoute à l'eau de trempe des composés facilement vaporisables de métaux nobles, de lanthanides, d'actinides, de germanium, de zirconium, d'yttrium, de cuivre, de nickel, de tungstène, de molybdène, d'aluminium ou de mélanges de ces composés.

11. Utilisation du noir de fumée de four selon les revendications 1 à 5 dans des piles à combustible et des blindages de câbles.

Figur 1

Combustion Air

Fuel Oil  Atomizing Air

Cooling Water

Make Oil

Quench

I

II

III

EP 1 078 958 B1